(19) Europäisches Patentamt
European Patent Office
Office européen des brevets

(11) EP 1 047 300 B1

(12) # EUROPÄISCHE PATENTSCHRIFT

(45) Veröffentlichungstag und Bekanntmachung des Hinweises auf die Patenterteilung:
**13.08.2003 Patentblatt 2003/33**

(21) Anmeldenummer: **98966337.2**

(22) Anmeldetag: **15.12.1998**

(51) Int Cl.7: **A01N 37/22**, A01N 43/76, A01N 43/78, A01N 43/56, A01N 43/653, A01N 43/40, A01N 43/32, A01N 43/16, A01N 43/08, A01N 37/24, A01N 47/38
// (A01N47/38, 43:78, 43:76, 43:56, 43:40, 43:32, 43:16, 43:08, 37:24), A01N37:22,(A01N43/653, 43:78, 43:76, 43:56)

(86) Internationale Anmeldenummer:
**PCT/EP98/08224**

(87) Internationale Veröffentlichungsnummer:
**WO 99/031979 (01.07.1999 Gazette 1999/26)**

(54) **FUNGIZIDE MISCHUNGEN AUF DER BASIS VON AMIDVERBINDUNGEN UND AZOLEN**

FUNGICIDE MIXTURES BASED ON AMIDE COMPOUNDS AND AZOLES

MELANGES FONGICIDES A BASE DE COMPOSES AMIDE ET D'AZOLES

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756405**

(43) Veröffentlichungstag der Anmeldung:
**02.11.2000 Patentblatt 2000/44**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **EICKEN, Karl**
  **D-67157 Wachenheim (DE)**
- **HAMPEL, Manfred**
  **D-67435 Neustadt (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 707 792**
**WO-A-95/15690**
**WO-A-97/08952**
**WO-A-97/39630**
**GB-A- 2 176 106**

EP 1 047 300 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft fungizide Mischungen zur Bekämpfung von Schadpilzen sowie Verfahren zur Bekämpfung von Schadpilzen unter Anwendung derartiger Mischungen.

Die WO 97/08952 beschreibt Mischungen aus Amidverbindungen der Formel I

$$\text{A-CO-NR}^1\text{R}^2 \qquad \text{(I)}$$

worin

A für eine Arylgruppe oder einen aromatischen oder nicht-aromatischen, 5- oder 6-gliedrigen Heterocyclus, der 1 bis 3 Heteroatome aufweist, die ausgewählt sind unter O, N und S, steht;
wobei die Arylgruppe oder der Heterocyclus gegebenenfalls 1, 2 oder 3 Substituenten aufweisen kann, die unabhängig voneinander ausgewählt sind unter Alkyl, Halogen, $CHF_2$, $CF_3$, Alkoxy, Halogenalkoxy, Alkylthio, Alkylsulfinyl und Alkylsulfonyl;

$R^1$ für ein Wasserstoffatom steht;

$R^2$ für eine Phenyl- oder Cycloalkylgruppe steht, die gegebenenfalls 1, 2 oder 3 Substituenten aufweist, die ausgewählt sind unter Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe mit einem gesättigten, 5-gliedrigen Ring kondensiert sein kann, der gegebenenfalls durch eine oder mehrere Alkylgruppen substituiert ist und/oder ein Heteroatom, ausgewählt unter O, und S, aufweisen kann, und dem als Akarizid bekannten Wirkstoff Fenazaquin.

Diese Mischungen werden als besonders gut wirksam gegen Botrytis beschrieben.

Aus den EP-B 531,837, EP-A 645,091 und WO 97/06678 sind fungizide Mischungen bekannt, die als eine Wirkstoffkomponente eines der Azole II.1. bis II.17 enthalten.

- 1-[(2RS,4RS;2RS,4SR)-4-brom-2-(2,4-dichlorphenyl)tetrahydrofuryl]-lH-1,2,4-triazol (II.1)

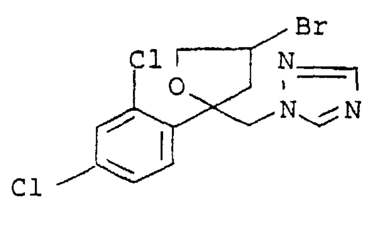

- 2-(4-Chlorphenyl)-3-cyclopropyl-1-(1H-1,2,4-triazol-1-yl)-butan-2-ol (II.2)

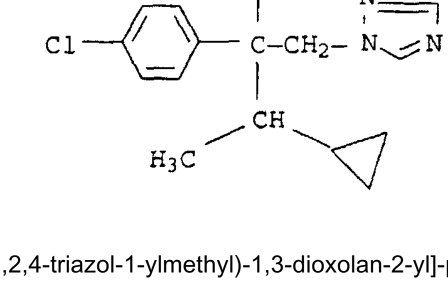

- (±)-4-Chlor-4-[4-methyl-2-(lH-1,2,4-triazol-1-ylmethyl)-1,3-dioxolan-2-yl]-phenyl-4-chlorphenylether (II.3)

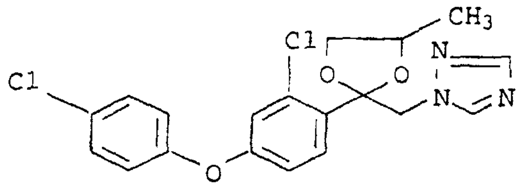

- (E)-(R,S)-1-(2,4-dichlorphenyl)-4,4-dimethyl-2-(1H-1,2,4-triazol-1-yl)pent-1-en-3-ol (II.4)

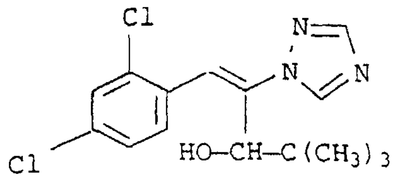

- (Z)-2-(1H-1,2,4-Triazol-1-ylmethyl)-2-[4-fluorphenyl)-3-(2-chlorphenyl)-oxiran (II.5)

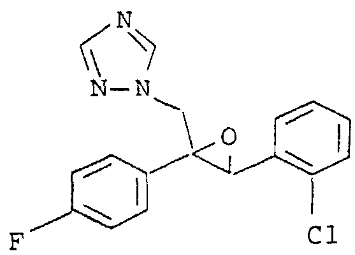

- 4-(4-Chlorphenyl)-2-phenyl-2-(1H-1,2,4-triazolylmethyl)butyronitril (II.6)

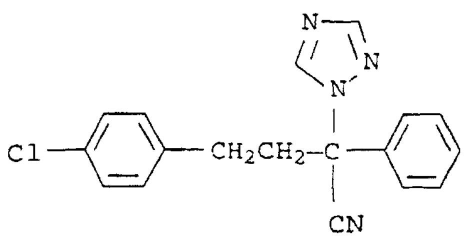

- 3-(2,4-dichlorphenyl)-6-fluor-2-(1H-1,2,4-triazol-1-yl)chinazolin-4(3H)-on (II.7)

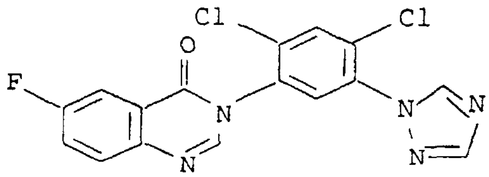

- Bis(4-fluorphenyl)(methyl)(1H-1,2,4-triazol-1-ylmethyl)silan (II.8)

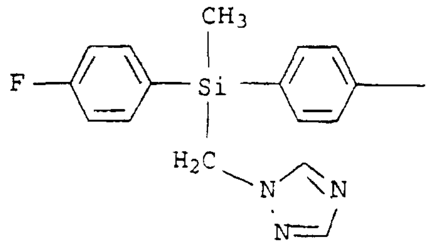

- (R,S)-2-(2,4-Dichlorphenyl)-1-(1H-1,2,4-triazol-1-yl)-hexan-2-ol (II.9)

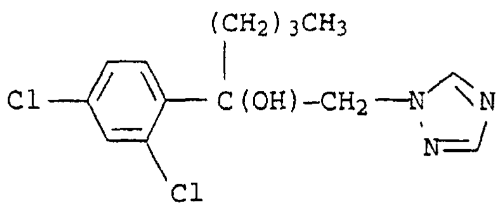

- (1RS,5RS;1RS,5SR)-5-(4-chlorbenzyl)-2,2-dimethyl-1-(1H-1,2,4-triazol-1-ylmethyl)cyclopentanol (II.10)

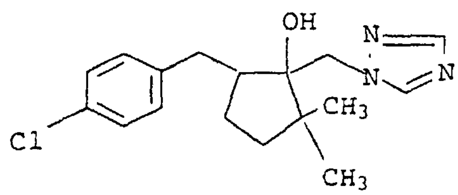

- N-Propyl-N-[2-(2,4,6-trichlorphenoxy)ethyl]imidazol-1-carboxamid (II.11)

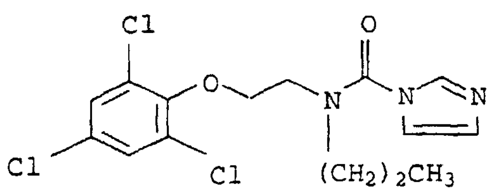

- (±)-1-[2-(2,4-dichlorphenyl)-4-propyl-1,3-dioxolan-2-ylmethyl]-1H-1,2,4-triazol (II.12)

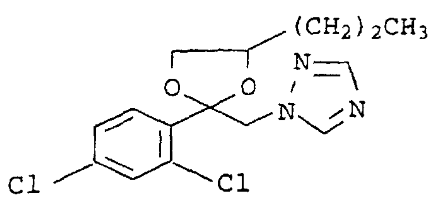

- (R,S)-1-(4-chlorphenyl)-4,4-dimethyl-3-(1H-1,2,4-triazol-1-ylmethyl)-pentan-3-ol (II.13)

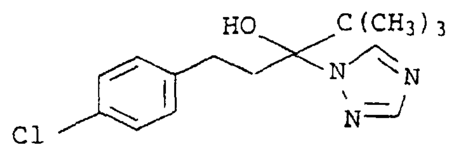

- (±)-2-(2,4-Dichlorphenyl)-3-(1H-1,2,4-triazol-yl)-propyl-1,1,2,2-tetrafluorethylether (II.14) und

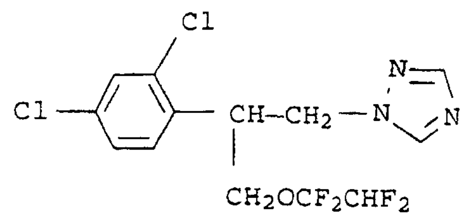

- (E)-1-[1-[[4-chlor-2-(trifluormethyl)-phenyl]imino]-2-propoxyethyl]-1H-imidazol (II.15)

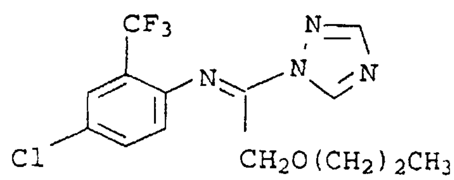

- (RS)-2,4'-Difluor-α-(1H-1,2,4-triazol-1-yl-methyl)-benzhydroyl-alkohol (II.16)

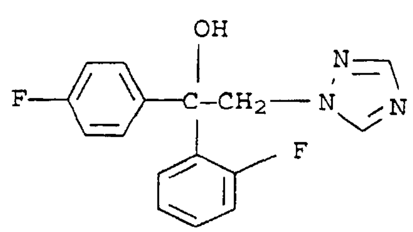

- 2-p-chlorphenyl-2-(1H-1,2,4-triazol-1-ylmethyl)-hexanenitril (II.17)

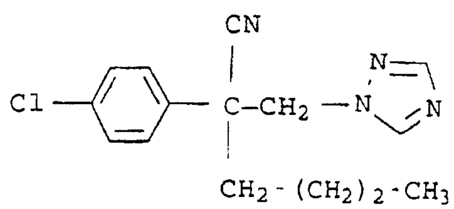

Die Azolderivate II, deren Herstellung und deren Wirkung gegen Schadpilze ist an sich bekannt:

II.1: common name: Bromuconazol, Proc. Br. Crop Prot. Conf.-Pests Dis., 5-6, 439 (1990);
II.2: common name: Cyproconazol, US-A 4,664,696;
II.3: common name: Difenoconazol, GB-A 2,098,607;
II.4: common name: Diniconazol, CAS RN [83657-24-3];
II.5: common name (vorgeschlagen): Epoxiconazol, EP-A 196 038;
II.6: common name: Fenbuconazol (vorgeschlagen), EP-A 251 775;
II.7: common name: Fluquinconazol, Proc. Br. Crop Prot. Conf.-Pests Dis., 5-3, 411 (1992);
II.8: common name: Flusilazol, Proc. Br. Crop Prot. Conf.-Pests Dis., 1, 413 (1984);
II.9: common name: Hexaconazol, CAS RN [79983-71-4];
II.10: common name: Metconazol, Proc. Br. Crop Prot. Conf.-Pests Dis., 5-4, 419 (1992);
II.11: common name: Prochloraz, US-A 3,991,071;
II.12: common name: Propiconazol, GB-A 1,522,657;
II.13: common name: Tebuconazol, US-A 4,723,984;
II.14: common name: Tetraconazol, Proc. Br. Crop Prot. Conf.-Pests Dis., 1, 49 (1988);
II.15: common name: Triflumizol, JP-A 79/119,462
II.16: common name: Flutriafol, CAS RN [76674-21-0]
II.17: common name: Myclobutanil, CAS RN [88671-89-0].

Der vorliegenden Erfindung lag die Aufgabe zugrunde, weitere Mittel zur Bekämpfung von Schadpilzen und insbesondere für bestimmte Indikationen zur Verfügung zu stellen.
Überraschenderweise wurde nun gefunden, daß diese Aufgabe mit einer Mischung gelöst wird, welche als Wirkstoffe Amidverbindungen der Formel Ib

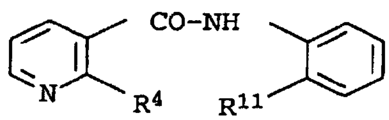

(Ib)

worin

$R^4$ für Halogen steht und
$R^{11}$ für Phenyl steht, das durch Halogen substituiert ist;

und als weitere fungizid wirksame Komponente einen fungiziden Wirkstoff aus der Klasse der Azole II.1 bis II.17 enthält.
Die erfindungsgemäßen Mischungen wirken synergistisch und sind daher zur Bekämpfung von Schadpilzen und insbesondere von echten Mehltaupilzen in Gemüse und Reben besonders geeignet.
Im Rahmen der vorliegenden Erfindung steht Halogen für Fluor, Chlor, Brom und Jod und insbesondere für Fluor, Chlor und Brom.
Brauchbare Amidverbindungen der Formel Ib sind in der EP-A-545 099 und 589 301, auf die hiermit in vollem Umfang Bezug genommen wird, genannt.
Die Herstellung der Amidverbindungen der Formel Ib ist beispielsweise aus der EP-A-545 099 oder 589 301 bekannt oder kann nach analogen Verfahren erfolgen.
Als Komponente II enthalten die erfindungsgemäßen Mischungen ein Azolderivat II ausgewählt aus der Gruppe der Verbindungen II.1 bis II.17
Um die synergistische Wirkung zu entfalten, genügt bereits ein geringer Anteil an Amidverbindung der Formel Ib. Vorzugsweise setzt werden Amidverbindung und Azol in einem Gewichtsverhältnis im Bereich von 20:1 bis 1:20, insbesondere 10:1 bis 1:10 eingesetzt.
Die Azole II sind wegen des basischen Charakters der in ihnen enthaltenden Stickstoffatome in der Lage, mit anorganischen oder organischen Säuren oder mit Metallionen Salze oder Addukte zu bilden.
Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.
Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren

mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe Ib und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen Ib und II bzw. die Verbindungen Ib und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von echten Mehltaupilzen in Reben- und Gemüsekulturen sowie in Zierpflanzen einsetzbar.

Die Verbindungen Ib und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen Ib bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen Ib und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen Ib und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol),

Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd. Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat. Sorbitester, Lignin-Sulfitablaugen oder Methylcellulose in Betracht.

Pulver Streu- und Stäubemittel können durch Mischen oder gemeinsames Vermahlen der Verbindungen Ib oder II oder der Mischung aus den Verbindungen Ib und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen Ib oder II bzw. der Mischung aus den Verbindungen Ib und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen Ib oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen Ib und II bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (**W**) wird nach der Formel von Abbot wie folgt bestimmt:

$$W = (1 - \alpha) \cdot 100/\beta$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel: $E = x + y - x \cdot y/100$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Wirksamkeit gegen Botrytis cinerea an Paprikaschoten

Scheiben von grünen Paprikaschoten wurden mit einer wäßrigen Wirkstoffaufbereitung, die aus einer Stammlösung aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die $1{,}7 \times 10^6$ Sporen pro ml einer 2 %igen Biomalzlösung enthielt, inokuliert. Die inokulierten Fruchtscheiben wurden anschließend in feuchten Kammern bei 18°C für 4 Tage inkubiert. Dann erfolgte visuell die Auswertung des Botrytis-Befalls auf den Befallenen Fruchtscheiben.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S.R. (Calculating synergistic and antagonistic responses of herbicide Combinations", Weeds, 15, S. 20-22, 1967) ermittelt und mit den beobachteten Wirkungsgraden vergleichen.

Als Verbindungen der Formel Ib wurden folgende Komponenten eingesetzt:

I.1 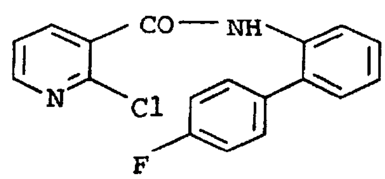

I.2 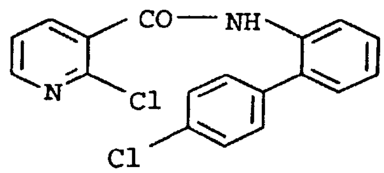

Die Ergebnisse sind den nachfolgenden Tabelle 1 und 2 zu entnehmen.

Tabelle 1:

| Bsp. | Wirkstoff | Wirkstoffkonzentration in der Spritzbrühe in ppm | Wirkungsgrad in % der unbehandelten Kontrolle |
|---|---|---|---|
| | Kontrolle (unbehandelt) | 0 (100 % Befall) | 0 |
| 7V | Verbindung I.1 | 31<br>16 | 60<br>10 |
| 8V | Verbindung I.2 | 16 | 80 |
| 3V | Verbindung II.2 (Cyproconazol) | 31<br>16 | 10<br>0 |
| 4V | Verbindung II.5 (Epoxiconazol) | 31<br>16 | 0<br>0 |
| 5V | Verbindung II.7 (Fluquinconazol) | 31<br>16 | 0<br>0 |
| 6V | Verbindung II.8 (Flusilazol) | 31<br>16 | 0<br>0 |
| 7V | Verbindung II.11 (Prochloraz) | 31<br>16 | 0<br>0 |
| 8V | Verbindung II.12 (Propiconazol) | 16 | 0 |
| 9V | Verbindung II.17 (Myclobutanil) | 16 | 0 |

Tabelle 2:

| Bsp. | erfindungsgemäße Mischungen (Gehalt in ppm) | beobachteter Wirkungsgrad | berechneter Wirkungsgrad*) |
|---|---|---|---|
| 10 | 31 ppm I.1<br>+<br>31 ppm II.2 | 99 | 64 |
| 11 | 16 ppm I.1<br>+<br>16 ppm II.2 | 30 | 10 |
| 12 | 31 ppm I.1<br>+<br>31 ppm II.5 | 80 | 60 |

*) berechnet nach der Colby-Formel

Tabelle 2: (fortgesetzt)

| Bsp. | erfindungsgemäße Mischungen (Gehalt in ppm) | beobachteter Wirkungsgrad | berechneter Wirkungsgrad*) |
|---|---|---|---|
| 13 | 16 ppm I.1<br>+<br>16 ppm II.5 | 25 | 10 |
| 14 | 16 ppm I.2<br>+<br>16 ppm II.5 | 90 | 80 |
| 15 | 31 ppm I.1<br>+<br>31 ppm II.7 | 80 | 60 |
| 16 | 16 ppm I.1<br>+<br>16 ppm II.7 | 70 | 10 |
| 17 | 16 ppm I.2<br>+<br>16 ppm II.7 | 95 | 80 |
| 18 | 31 ppm I.1<br>+<br>31 ppm II.8 | 95 | 60 |
| 19 | 16 ppm I.1<br>+<br>16 ppm II.8 | 35 | 10 |
| 20 | 16 ppm I.2<br>+<br>16 ppm II.8 | 95 | 80 |
| 21 | 31 ppm I.1<br>+<br>31 ppm II.11 | 75 | 60 |
| 22 | 16 ppm I.1<br>+<br>16 ppm II.11 | 30 | 10 |
| 23 | 16 ppm I.1<br>+<br>16 ppm II.12 | 35 | 10 |
| 24 | 16 ppm I.2<br>+<br>16 ppm II.12 | 90 | 80 |
| 25 | 16 ppm I.1<br>+<br>16 ppm II.17 | 40 | 10 |
| 26 | 16 ppm I.2<br>+<br>16 ppm II.17 | 95 | 80 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad

**Patentansprüche**

**1.** Fungizide Mischungen, enthaltend als aktive Komponenten

a) eine Amidverbindung der Formel Ib

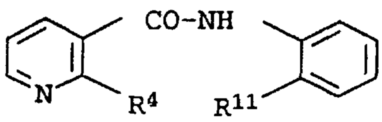

(Ib)

worin

$R^4$ für Halogen steht und
$R^{11}$ für Phenyl steht, das durch Halogen substituiert ist;

und

b) ein Azolderivat II ausgewählt aus der Gruppe der Verbindungen II.1 bis II.17

- 1-[(2RS,4RS;2RS,4SR)-4-brom-2-(2,4-dichlorphenyl)tetrahydrofuryl]-lH-1,2,4-triazol (II.1)
- 2-(4-Chlorphenyl)-3-cyclopropyl-1-(1H-1,2,4-triazol-1-yl)-butan-2-ol (II.2)
- (±)-4-Chlor-4-[4-methyl-2-(1H-1,2,4-triazol-1-ylmethyl)-1,3-dioxolan-2-yl]-phenyl-4-chlorphenylether (II. 3)
- (E)-(R,S)-1-(2,4-dichlorphenyl)-4,4-dimethyl-2-(lH-1,2,4-triazol-1-yl)pent-1-en-3-ol (II.4)
- (Z)-2-(1H-1,2,4-Triazol-1-ylmethyl)-2-(4-fluorphenyl)-3-(2-chlorphenyl)-oxiran (II.5)
- 4-(4-Chlorphenyl)-2-phenyl-2-(1H-1,2,4-triazolylmehtyl)-butyronitril (II.6)
- 3-(2,4-dichlorphenyl)-6-fluor-2-(1H-1,2,4-triazol-1-yl)chinazolin-4(3H)-on (II.7)
- Bis(4-fluorphenyl)(methyl)(1H-1,2,4-triazol-1-ylmethyl)silan (II.8)
- (R,S)-2-(2,4-Dichlorphenyl)-1-(1H-1,2,4-triazol-1-yl)-hexan-2-ol (II.9)
- (1RS,5RS;1RS,5SR)-5-(4-chlorbenzyl)-2,2-dimenthyl-1-(1H-1,2,4-triazol-1-ylmethyl)cyclopentanol (II. 10)
- N-Propyl-N-[2-(2,4,6-trichlorphenoxy)ethyl]imidazol-1-carboxamid (II.11)
- (±)-1-[2-(2,4-dichlorphenyl)-4-propyl-1,3-dioxolan-2-ylmethyl]-lH-1,2,4-triazol (II.12)
- (R,S)-1-(4-chlorphenyl)-4,4-dimethyl-3-(1H-1,2,4-triazol-1-ylmethyl)-pentan-3-ol (II.13)
- (±)-2-(2,4-Dichlorphenyl)-3-(1H-1,2,4-triazol-yl)-propyl-1,1,2,2-tetrafluorethylether (II.14) und
- (E)-1-[1-[[4-Chlor-2-(trifluormethyl)-phenyl]imino]-2-propoxyethyl]-1H-imidazol (II.15)
- (RS)-2,4'-Difluor-α-(1H-1,2,4-triazol-1-ylmethyl)-benzhydryl-alkohol (II.16)

- 2-p-Chlorphenyl-2-(1H-1,2,4-triazol-1-ylmethyl)-hexanenitril (II.17)

in einer synergistisch wirksamen Menge.

**2.** Fungizide Mischung nach Anspruch 1, welche als Amidverbindung eine Verbindung der nachfolgenden Formeln enthält:

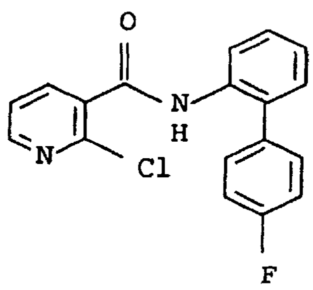

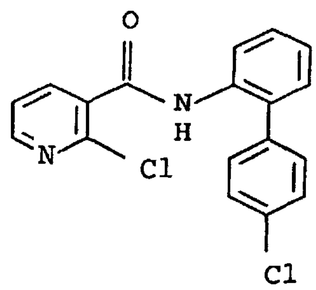

**3.** Fungizide Mischung nach einem der vorhergehenden Ansprüche, welche in zwei Teilen konditioniert ist, wobei der eine Teil die Amidverbindung Ib in einem festen oder flüssigen Träger enthält und der andere Teil ein Azol der Formeln II.1 bis II.17 in einem festen oder flüssigen Träger enthält.

**4.** Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einer fungiziden Mischung gemäß einem der Ansprüche 1 bis 3 behandelt, wobei die Anwendung der Wirkstoffe Amidverbindung Ib und ein Azol der Formeln II.1 bis II.17 gleichzeitig, und zwar gemeinsam oder getrennt, oder nacheinander erfolgen kann.

**Claims**

**1.** A fungicidal mixture, comprising as active components

a) an amide compound of the formula Ib

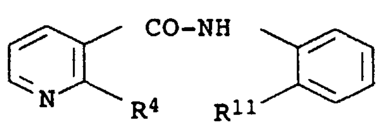

(Ib)

in which

$R^4$ is halogen and
$R^{11}$ is phenyl which is substituted by halogen;

and

b) an azole derivative II selected from the group of the compounds II.1 to II.17

- 1-[(2RS,4RS;2RS,4SR)-4-bromo-2-(2,4-dichlorophenyl)-tetrahydrofuryl]-1H-1,2,4-triazole (II.1)

- 2-(4-chlorophenyl)-3-cyclopropyl-1-(lH-1,2,4-triazol-1-yl)butan-2-ol (II.2)

- (±)-4-chloro-4-[4-methyl-2-(lH-1,2,4-triazol-1-ylmethyl)-1,3-dioxolan-2-yl]phenyl 4-chlorophenyl ether (II.3)
- (E)-(R,S)-1-(2,4-dichlorophenyl)-4,4-dimethyl-2-(1H-1,2, 4-triazol-1-yl)pent-l-en-3-ol (II.4)
- (Z)-2-(lH-1,2,4-triazol-1-ylmethyl)-2-(4-fluorophenyl)-3-(2-chlorophenyl)-oxirane (II.5)
- 4-(4-chlorophenyl)-2-phenyl-2-(1H-1,2,4-triazolylmethyl)butyronitrile (II.6)
- 3-(2,4-dichlorophenyl)-6-fluoro-2-(1H-1,2,4-triazol-1-yl) quinazolin-4(3H)-one (II.7)
- bis(4-fluorophenyl)(methyl)(lH-1,2,4-triazol-1-ylmethyl)silane (II.8)
- (R,S)-2-(2,4-dichlorophenyl)-1-(1H-1,2,4-triazol-1-yl)hexan-2-ol (II.9)
- (1RS,5RS;1RS,5SR)-5-(4-chlorobenzyl)-2,2-dimethyl-1-(1H-1,2,4-triazol-1-ylmethyl)cyclopentanol (II.10)
- N-propyl-N-[2-(2,4,6-trichlorophenoxy)ethyl]imidazol-1-carboxamide (II.11)
- (±)-1-[2-(2,4-dichlorophenyl)-4-propyl-1,3-dioxolan-2-ylmethyl]-1H-1,2,4-triazole (II.12)
- (R,S)-1-(4-chlorophenyl)-4,4-dimethyl-3-(1H-1,2,4-triazol-1-ylmethyl)pentan-3-ol (II.13)
- (±)-2-(2,4-dichlorophenyl)-3-(1H-1,2,4-triazolyl)propyl 1,1,2,2-tetrafluoroethyl ether (II.14) and
- (E)-1-[1-[[4-chloro-2-(trifluoromethyl)phenyl]imino]-2-propoxyethyl]-1H-imidazole (II.15)
- (RS)-2,4'-difluoro-α-(1H-1,2,4-triazol-1-ylmethyl)benzhydryl alcohol (II.16)
- 2-p-chlorophenyl-2-(1H-1,2,4-triazol-1-ylmethyl)hexanenitrile (II.17)

in a synergistically effective amount.

**2.** A fungicidal mixture as claimed in claim 1, which comprises as amide compound a compound of the formulae below:

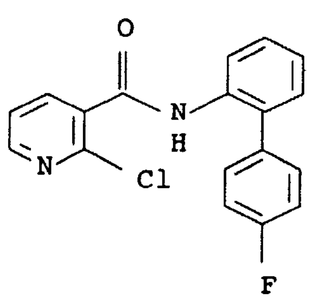

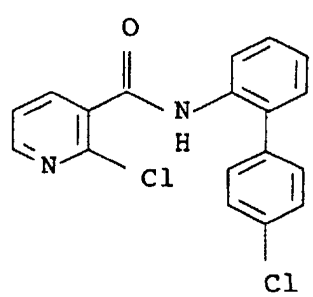

**3.** A fungicidal mixture as claimed in any of the preceding claims, which is conditioned in two parts, one part comprising the amide compound Ib in a solid or liquid carrier and the other part comprising an azole of the formulae II.1 to II.17 in a solid or liquid carrier.

**4.** A method for controlling harmful fungi, which comprises treating the fungi, their habitat, or the materials, plants, seeds, soils, areas or spaces to be protected against fungal attack with a fungicidal mixture as claimed in any of claims 1 to 3, where the application of the active compounds amide compound Ib and an azole of the formulae II.1 to II.17 may be carried out simultaneously, that is either together or separately, or in succession.

## Revendications

**1.** Mélanges fongicides contenant comme composants actifs

a) un composé amide de formule Ib

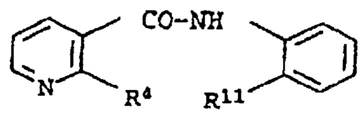

(Ib)

dans laquelle

$R^4$ représente un atome d'halogène et
$R^{11}$ représente un groupe phényle, substitué par un atome d'halogène et

b) un dérivé azole II choisi parmi le groupe des composés 11.1 à 11.17

- 1-[(2RS,4RS ; 2RS,4SR)-4-bromo-2-(2,4-dichlorophényl)tétrahydrofuryl]-1H-1,2,4-triazole (II.1)
- 2-(4-chlorophényl)-3-cyclopropyl-1-(1H-1,2,4-triazol-1-yl)-butan-2-ol (11.2)
- (±)-4-chlore-4-[4-méthyl-2-(1H-1,2,4-triazol-1-ylméthyl)-1,3-dioxolan-2-yl]-phényl-4-chlorophénylether (II. 3 )
- (E)-(R,S)-1-(2,4-dichlorophényl)-4,4-diméthyl-2-(1H-1,2,4-triazol-1-yl)-pent-1-én-3-ol (II.4)
- (Z) -2- (1H-1,2,4-triazol-1-ylméthyl)-2-(4-fluorophényl)-3-(2-chlorophényl)-oxiranne (II.5)
- 4-(4-chlorophényl)-2-phényl-2-(1H-1,2,4-triazolylméthyl)-butyronitrile (II.6)
- 3-(2,4-dichlorophényl)-6-fluoro-2-(1H-1,2,4-triazol-1-yl)quinazoléin-4(3H)-one (11.7)
- Bis-(4-fluorophényl)(méthyl)(1H-1,2,4-triazol-1-yl-méthyl)silane (II.8)
- (R, S)-2-(2,4-dichlorophényl) -1- (1H-1,2,4-triazol-1-yl)-hexan-2-ol (II.9)
- (1RS,5RS ; 1RS,5SR)-5-(4-chlorobenzyl)-2,2-dimenthyl-1-(1H-1,2,4-triazol-1-ylméthyl)cyclopentanol (11.10)
- N-propyl-N-[2-(2,4,6-trichlorophénoxy)éthyl]imidazol-1-carboxamide (II.11)
- (±)-1-[2-(2,4-dichlorophényl)-4-propyl-1,3-dioxolan-2-yl-méthyl]-1H-1,2,4-triazole (11.12)
- (R,S)-1-(4-chlorophényl)-4,4-diméthyl, 3-(1H-1,2,4-triazol-1-ylméthyl)-pentan-3-ol (II.13)
- (±)-2-(2,4-dichlorophényl)-3-(1H-1,2,4-triazolyl)-propyl-1,1,2,2-tétrafluoroéthyléther (II.14) et
- (E)-1-(1-[[4-chloro-2-(trifluorométhyl)-phényl]imino]-2-propoxyéthyl]-1H-imidazole (II.15)
- alcool (RS)-2,4'-difluoro-α-(1H,1,2,4-triazol-1-ylméthyl)-benzhydrylique (11.16)
- 2-p-chlorophényl-2-(1H-1,2,4-triazol-1-ylméthyl)hexanenitrile (11.17) en une quantité synergiquement active.

**2.** Mélange fongicide selon la revendication 1, qui contient comme composé amide un composé présentant les formules suivantes :

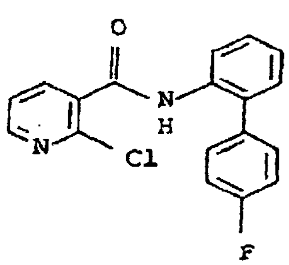

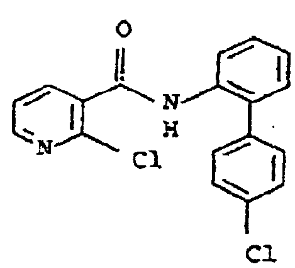

**3.** Mélange fongicide selon l'une quelconque des revendications précédentes, qui est conditionné en deux parties, une partie contenant le composé amide Ib dans un support solide ou fluide et l'autre partie un azole des formules

II.1 à II.17 dans un support solide ou fluide.

**4.** Procédé pour lutter contre des champignons nuisibles, **caractérisé en ce qu'**on traite les champignons, leur espace de vie ou les matériaux, les plantes, les semences, les sols, les surfaces ou les espaces à protéger contre une attaque par les champignons avec un mélange fongicide selon l'une quelconque des revendications 1 à 3, l'application des substances actives, un composé amide Ib et un azole des formules II.1 à II.17 pouvant être réalisée simultanément, et ce ensemble ou séparément, ou successivement.